# EUROPÄISCHE PATENTSCHRIFT

(11) **EP 1 130 486 B1**
(45) Veröffentlichungstag und Bekanntmachung des Hinweises auf die Patenterteilung: **21.06.2006**
(21) Anmeldenummer: 00126036.3
(22) Anmeldetag: 29.11.2000
(51) Int. Cl.: G05B 19/44, B25J 9/16

(54) **Verfahren und Vorrichtung zum exakten Führen eines Bearbeitungswerkzeugs mit einem Roboter**
Method and device for accurate guiding of a machining tool with a robot
Méthode et dispositif pour le guidage précis d'un outil d'usinage grâce à un robot

(30) Priorität: 04.03.2000 DE 10010689
(43) Veröffentlichungstag der Anmeldung: 05.09.2001
(73) Patentinhaber: KLÖCKNER DESMA SCHUHMASCHINEN GmbH, 28832 Achim (DE)
(72) Erfinder: Lissek, Andreas, 28832 Achim (DE); Lühr, Joachim, Dipl.-Ing., 27327 Schwarme (DE)
(74) Vertreter: Röther, Peter

(56) Entgegenhaltungen:
- WO-A-98/42482
- DE-A- 3 815 013
- US-A- 5 509 848

## Beschreibung

Die Erfindung betrifft ein Verfahren zum exakten Führen eines Bearbeitungswerkzeugs mit einem Roboter, wobei das Werkzeug mittels einer Robotersteuerung an der Kontur des zu bearbeitenden Werkstücks mit einer bestimmten Andruckkraft entlanggefahren wird, sowie eine Vorrichtung zur Durchführung des Verfahrens.

Ein derartiges Verfahren ist beispielsweise aus der DE-A-38 15 013.1-26 bekannt. Das dort beschriebene Verfahren betrifft den industriellen Schuhherstellungsbereich.

Auf einer sogenannten Rundtischanlage ist eine Vielzahl von Formstationen vorgesehen, mit Hilfe derer an auf Leisten gezogene Schäfte Gummi- oder Kunststoffsohlen angespritzt werden. Damit eine gute Verbindung zwischen Sohlenmaterial und Schaftmaterial gewährleistet ist, muß die Verbindungsfläche des Schaftes vor dem Spritzvorgang aufgerauht werden. Gegebenenfalls muß in diesem Bereich auch eine Klebeschicht aufgebracht werden. Nach dem Spritzvorgang ist es eventuell nötig, mit Hilfe eines Messers die beim Spritzvorgang entstandenen Grate abzuschneiden. Diese Vorgänge werden gemäß der zitierten Druckschrift mittels eines Roboters ausgeführt, der an seinem Arm die entsprechenden Bearbeitungswerkzeuge trägt. Die Schuhform, die Konturdaten des zu bearbeitenden Bereichs sowie die Schuhgrößen sind in der Robotersteuerung programmiert, so daß der Bearbeitungsvorgang automatisch ablaufen kann.

Insbesondere an Schuhansohlanlagen haben diese Bearbeitungen mit Robotern in vielen Fällen unter einem Winkel von 45° im Raum am Schuh stattzufinden. Da ein nachführendes System mit gesteuerten Andruck benötigt wird, müssen die Bearbeitungswerkzeuge zum Objekt nachgeführt werden können. Diese Beweglichkeit bedeutet aber auf der anderen Seite, daß die zu bewegenden Teile (Werkzeug, Antrieb) mit Gewichtskraft den Andruck negativ beeinflussen. So zieht die Gewichtskraft der bewegten Masse das Werkzeug im Absatzbereich vom Werkstück weg, während sie im Spitzenbereich des Schuhs den Andruck noch verstärkt.

Es ist zwar aus der Druckschrift US-A-5 509 848 (Shimbara Yoshimi) bereits ein Verfahren zum exakten Führen eines Bearbeitungswerkzeugs mit einem Roboter bekannt, wobei das Werkzeug mittels einer Robotersteuerung an der Kontur des zu bearbeitenden Werkstücks mit einer bestimmten Andruckkraft entlang gefahren wird und dabei bestimmte Winkelstellungen im Raum berücksichtigt werden.

Es handelt sich hierbei jedoch um ein Polierwerkzeug für beispielsweise Autokarosserien, was bedeutet, dass die Andruckkraft lediglich in einem kleinen Winkelbereich geregelt werden muss, da die Bearbeitungsrichtung im wesentlichen die Vertikale ist, so dass gravierende Kraftveränderungen hier ausgeschlossen sind.

Der Erfindung liegt daher die Aufgabe zugrunde, ein Werkzeug so zu führen, daß der Andruck des Werkzeugs auf das Werkstück unabhängig von der Lage und der Winkelstellung im Raum konstant bleibt und zwar in allen Raumrichtungen.

Eine weitere Aufgabe der Erfindung besteht darin, eine geeignete Vorrichtung zur Durchführung des Verfahrens anzugeben.

Erfindungsgemäß wird die Aufgabe gemäß dem Kennzeichnenden Teil des Anspruchs 1 durch ein Verfahren zum exakten Führen eines Bearbeitungswerkzeugswerkzeugs entlang einer in sich geschlossenen Kurve im Raum gelöst, wobei diese Kurve zwei Extremstellen aufweist, in deren einer die Gewichtskraft des Bearbeitungswerkzeugs sich zur Andruckkraft addiert während in deren zweiter sich die Gewichtskraft des Bearbeitungswerkzeugs von der Andruckkraft subtrahiert und wobei das Werkzeug mittels einer Robotersteuerung an der Kontur des zu bearbeitenden Werkstücks mit einer bestimmten Andruckkraft entlang gefahren wird, derart, daß die jeweilige Winkelstellung des Werkzeugs im Raum in regelmäßigen Zeitabständen mit Hilfe der Robotersteuerung über ein im Hintergrund ablaufendes Roboterprogramm ermittelt wird und als Soll-Wert an ein Regelglied übertragen wird und den dort jeweils vorliegenden Ist-Wert ersetzt und als an die Werkzeugwinkelstellung angepaßter Ausgangswert den Andruck des Werkzeugs an das Werkstück derart regelt, daß das Eigengewicht des Werkzeugs beim Andruck desselben an das Werkstück über den gesamten Bearbeitungsweg kompensiert wird, wobei die Winkelstellung des Werkzeugs aus den jeweiligen Achsdaten des Roboters ermittelt wird.

Hiermit wird es möglich, konstante Bearbeitungsergebnisse über den gesamten Arbeitsablauf zu erhalten.

Der zweite Teil der Aufgabe wird gemäß dem kennzeichnenden Teil des Anspruchs 4 dadurch gelöst, daß den die Stellung des Bearbeitungswerkzeugs im Raum bewirkenden Aggregaten ein Regelglied vorgeschaltet ist, dessen Eingang mit einem durch ein im Hintergrund ablaufendes Roboterprogramm in definierten Zeitabständen ermittelten, der jeweiligen Winkelstellung des Werkzeugs entsprechenden Soll-Wert beaufschlagbar ist, aufgrund dessen das Regelglied einen Ausgangswert zur Regelung der Andruckkraft des Werkzeugs am Werkstück erzeugt.

Die Ermittlung der aktuellen Winkelstellung des Werkzeugs im Raum erfolgt über die Robotersteuerung. Die Winkelstellung wird dabei aus den jeweiligen Achsdaten herausgelesen und dann als Soll-Wert an das Regelglied übertragen. Hierfür läuft das separate Roboterprogramm im Hintergrund, welches gemäß Anspruch 2 im Abstand von 0,2 Sek. die Winkelstellung ermittelt und aktualisierte Werte an das Regelglied liefert.

Nach einer Grundeinstellung des Systems läuft die Gewichtskompensation automatisch im Hintergrund ab. Hierdurch können die Bearbeitungsergebnisse entscheidend verbessert werden.

In einer bevorzugten Ausführungsform der Erfindung wird als Regelglied ein Druckproportional-Ventil verwendet, wobei dieses Druckproportional-Ventil den Pneumatikzylindern vorgeschaltet ist, die die jeweilige Stellung des Bearbeitungswerkzeugs im Raum bewirken.

Alternativ kann jedoch eine elektromechanische Lösung vorgesehen sein, wobei als Regelglied ein elektronischer Mikroprozessor vorgesehen ist und als Aggregate in diesem Fall elektrische Schrittmotoren vorgesehen werden.

Die Erfindung wird im folgenden anhand von Zeichnungen dargestellt und näher erläutert.

Es zeigen:
- Fig. 1:: Bearbeitungswerkzeug in zwei verschiedenen Stellungen am zu bearbeitenden Schuh,
- Fig. 2:: Schaltplan der pneumatischen Drucksteuerung für den Andruck des Bearbeitungswerkzeugs am Schuh.

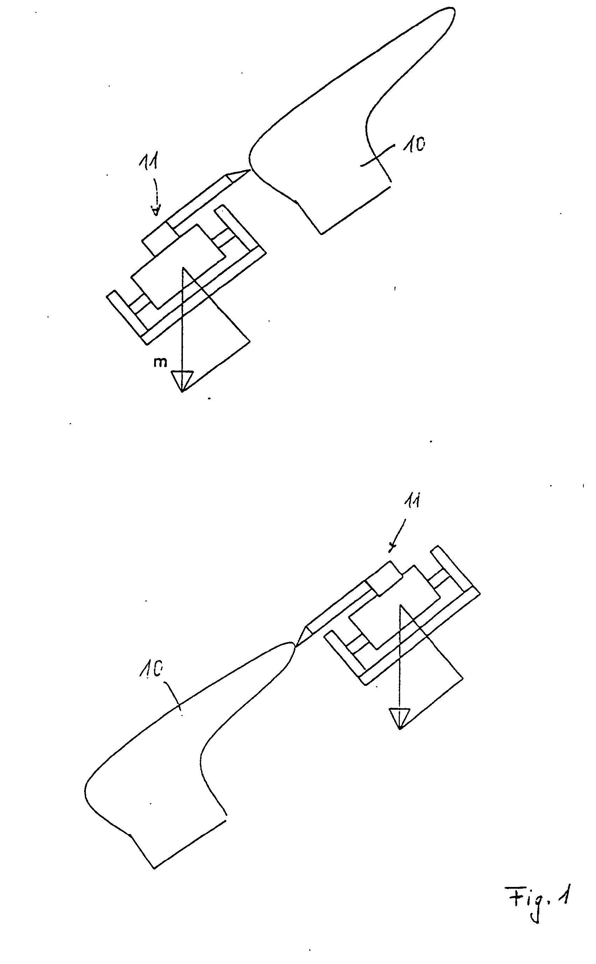

In der Fig. 1 ist ein Bearbeitungswerkzeug in zwei verschiedenen Bearbeitungsstellungen an einem schematisch dargestellten mit einem Schuhschaft bezogenen Leisten 10 dargestellt und allgemein mit den Bezugszeichen 11 versehen. In der oberen Darstellung befindet sich das Bearbeitungswerkzeug im Bereich der Ferse, während in der unteren Darstellung das Bearbeitungswerkzeug 11 im Bereich der Schuhspitze angeordnet ist. In diesen zwei Extremstellungen wirkt sich das Eigengewicht m des Bearbeitungswerkzeugs am gravierendsten auf die Andruckkraft aus, mit dem das Bearbeitungswerkzeug auf den Schuhschaft wirkt. In der obigen Darstellung wird der eigentlich gewünschte Andruck um den Einfluß des Eigengewichts vermindert, während sich in der unteren Darstellung der Andruck um das Eigengewicht des Bearbeitungswerkzeugs 11 vergrößert.

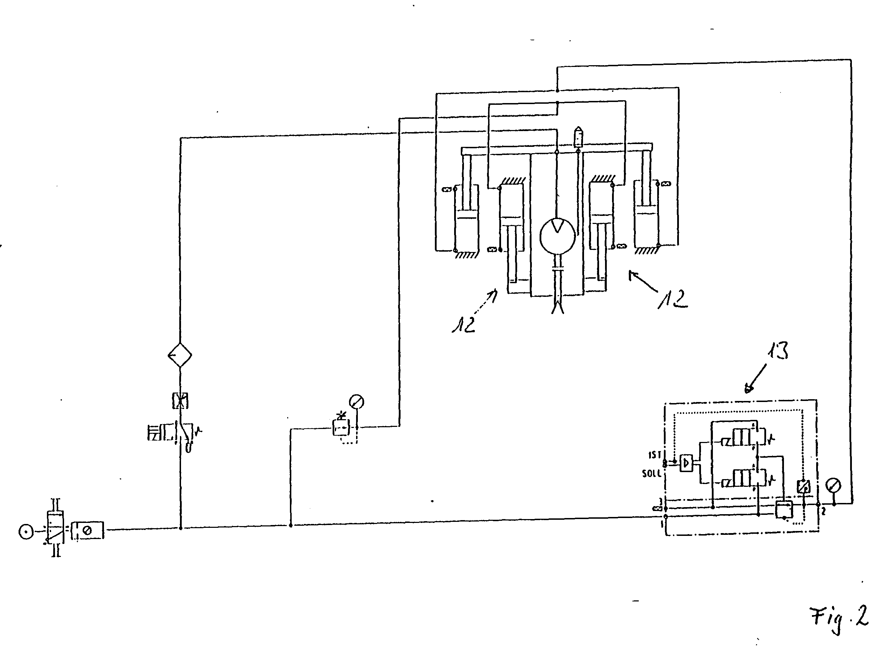

Um diesen schädlichen Einfluß zu kompensieren, wird die pneumatische Schaltung der Betätigungsorgane (in diesem Fall Pneumatikzylinder 12) des Bearbeitungswerkzeugs 11, das an dem Arm eines Bearbeitungsroboters (nicht dargestellt) angeordnet ist, entsprechend Fig. 2 ergänzt. Zur Kompensation des Eigengewichts des Bearbeitungswerkzeugs 11 wird in regelmäßigen Zeitabständen mit Hilfe der Robotersteuerung über ein separates Roboterprogramm die jeweilige Winkelstellung des Bearbeitungswerkzeugs 11 im Raum ermittelt und als Analogsignal an ein DruckProportionalventil 13 übertragen. Mit dem aus dem Analogsignal resultierenden Druck werden pneumatische Zylinder 12 des Bearbeitungswerkzeugs 11 beaufschlagt.
Diese mit variablem Druck aus dem Proportionalventil versorgten pneumatischen Zylinder arbeiten gegen zwei andere pneumatische Zylinder, die mit einem festen Gegendruck beaufschlagt sind.
Die aus den unterschiedlichen Drücken resultierende Kraftdifferenz dient zur Kompensation des wirksamen Eigengewichts.

Beim Abfahren der Schaftkontur wird somit in kurzen Zeitabständen (0,2 Sek.) abhängig von der jeweiligen Winkelstellung des Bearbeitungswerkzeugs 11 im Raum der störende Anteil des Eigengewichts des Bearbeitungswerkzeugs 11 kompensiert, so daß an praktisch jedem Punkt der Kontur das Bearbeitungswerkzeug 11 mit der gewünschten Andruckkraft auf das Werkstück (Schaft) wirkt.

## Patentansprüche

1. Verfahren zum exakten Führen eines Bearbeitungswerkzeugs entlang einer in sich geschlossenen Kurve im Raum, wobei diese Kurve zwei Extremstellen aufweist, in deren einer die Gewichtskraft des Bearbeitungswerkzeugs sich zur Andruckkraft addiert während in deren zweiter sich die Gewichtskraft des Bearbeitungswerkzeugs von der Andruckkraft subtrahiert und wobei das Werkzeug mittels einer Robotersteuerung an der Kontur des bearbeitenden Werkstücks mit einer bestimmten Andruckkraft entlang gefahren wird **dadurch gekennzeichnet,**
**dass** die jeweilige Winkelstellung des Werkzeugs im Raum in regelmäßigen Zeitabständen mit Hilfe der Robotersteuerung über ein im Hintergrund ablaufendes Roboterprogramm ermittelt wird und als Sollwert an ein Regelglied übertragen wird und den dort jeweils vorliegenden Ist-Wert ersetzt und als an die Werkzeugwinkelstellung angepasster Ausgangswert den Andruck des Werkzeugs an das Werkstück derart regelt, dass das Eigengewicht des Werkzeugs beim Andruck desselben an das Werkstück über den gesamten Bearbeitungsweg kompensiert wird, wobei die Winkelstellung des Werkzeugs aus den jeweiligen Achsdaten des Roboters ermittelt wird.

2. Verfahren nach Anspruch 1,
**dadurch gekennzeichnet,**
**dass** die Ermittlung der Winkelstellung des Werkzeugs im Abstand von 0,2 Sek. erfolgt.

3. Verfahren nach Anspruch 1 oder 2, **dadurch gekennzeichnet,dass** als Regelglied ein Druckproportionalventil verwendet wird, wobei der in regelmäßigen Zeitabständen ermittelte Sollwert als Analogsignal an das Druckproportionalventil übertragen wird und mit dem aus dem Analogsignal resultierenden Druck pneumatische Zylinder des Bearbeitungswerkzeugs beaufschlagt werden, die gegen zwei andere pneumatische Zylinder arbeiten, die mit einem festen Gegendruck beaufschlagt sind und die aus den unterschiedlichen Drücken resultierende Kraft -Differenz zur Kompensation des wirksamen Eigengewichts dient.

4. Vorrichtung zum exakten Führen eines Bearbeitungswerkzeugsh (11) entlang einer in sich geschlossenen Kurve im Raum, wobei diese Kurve zwei Extremstellen aufweist, in deren einer die Gewichtskraft des Bearbeitungswerkzeuges sich zur Andruckkraft addiert während in deren zweiter sich die Gewichtskraft des Bearbeitungswerkzeugs (11) von der Andruckkraft subtrahiert, bestehend aus einem Roboter, an dessen Arm ein Bearbeitungswerkzeug (11) angeordnet ist, das mittels durch eine Robotersteuerung betätigte Aggregate einen definierten Kurvenverlauf entsprechend der Kontur des zu bearbeitenden Werkstücks (10) mit einer bestimmten Andruckkraft abfährt,
**dadurch gekennzeichnet,**
**dass** den die Stellung des Bearbeitungswerkzeuges (11) im Raum wirkenden Aggregaten (12) ein Regelglied (13) vorgeschaltet ist, dessen Eingang mit einem durch ein im Hintergrund ablaufendes Roboterprogramm in definierten Zeitabständen ermittelteten, der jeweiligen Winkelstellung des Werkzeugs (11) entsprechenden Soll-Wert beaufschlagbar ist, aufgrund dessen das Regelglied (13) einen Ausgangswert /Ist-Wert zur Regelung der Andruckkraft des Werkzeugs (11) am Werkstück (10) erzeugt.

5. Vorrichtung nach Anspruch 4,
**dadurch gekennzeichnet,**
**dass** das Regelglied ein Druckproportionalventil ist und die Aggregate (12) Pneumatikzylinder sind.

6. Vorrichtung nach Anspruch 4,
**dadurch gekennzeichnet,**
**dass** das Regelglied ein elektronischer Mikroprozessor ist und die Aggregate elektrische Schrittmotoren sind.

## Claims

1. Method for precise guidance of a machining tool along a closed curve in space, whereby this curve has two extreme points, at one of which the weight of the machining tool is added to the pressing force, while at the second point the weight of the machining tool is subtracted from the pressing force and whereby the tool is driven by a robotic controller along the contour of the workpiece to be processed using a specified pressing force, **characterised in that** the respective angular position of the tool in space is determined at regular intervals with the aid of the robotic controller via a robotic program running in the background and is transferred as a set value to an adjustment member and replaces the actual value therein and regulates the pressing force of the tool on the workpiece as an initial value adapted to the angular position of the tool in such a way that the dead weight of the tool when said tool is pressed onto the workpiece is compensated over the entire working range, whereby the angular position of the tool is determined from the respective axis data of the robot.

2. Method according to claim 1,
**characterised in**
**that** the angular position of the tool is determined at intervals of 0.2 sec.

3. Method according to claim 1 or 2,
**characterised in**
**that** a proportional pressure-reducing valve is used, whereby the set value determined at regular intervals is transferred to the proportional pressure-reducing valve in the form of an analogue signal and pneumatic cylinders of the machining tool are acted upon by the pressure resulting from the analogue signal, said cylinders working against two other pneumatic cylinders, which are acted upon by a fixed counter-pressure, and the force differential resulting from the different pressures serves to compensate the effective dead weight.

4. Device for the precise guidance of a machining tool (11) along a closed curve in space, whereby this curve has two extreme points, at one of which the weight of the machining tool (11) is added to the pressing force, while at the second thereof the weight of the machining tool (11) is subtracted from the pressing force, consisting of a robot on the arm of which a machining tool (11) is disposed, which, by means of an aggregate actuated by a robotic controller, follows a defined curve corresponding to the contour of the workpiece (10) to be processed at a defined pressing force,
**characterised in**
**that** an adjustment member (13) is connected in series with the aggregates (12) which effect the positioning of the machining tool (11) in space, the input of which adjustment member can be acted on by a set value determined at regular intervals via a robotic program running in the background and corresponding to the respective angular position of the tool (11), on the basis of which set value the adjustment member (13) generates an initial value/actual value to regulate the pressing force of the tool (11) on the workpiece (10).

5. Device according to claim 4, **characterised in that** the adjustment member (13) is a proportional pressure-reducing valve and the aggregates (12) are pneumatic cylinders.

6. Device according to claim 4,
**characterised in**
**that** the adjustment member is an electronic microprocessor and the aggregates are electrical stepper motors.

## Revendications

1. Procédé pour le guidage précis d'un outil d'usinage le long d'une courbe fermée dans l'espace, cette courbe présentant deux points extrêmes dans l'un desquels la force de gravité de l'outil d'usinage s'additionne à la force de pression, tandis que dans le deuxième point, la force de gravité de l'outil d'usinage se soustrait de la force de pression, et l'outil étant déplacé au moyen d'une commande de robot le long du contour de la pièce à usiner, avec une force de pression déterminée, **caractérisé**
**en ce que** la position angulaire respective de l'outil dans l'espace est déterminée à intervalles de temps réguliers, à l'aide de la commande de robot, par un programme de robot se déroulant en arrière-plan, et est transmise comme valeur de consigne à un organe de régulation et remplace la valeur réelle se trouvant dans chaque cas à cet endroit, et régule, en tant que valeur de sortie adaptée à la position angulaire de l'outil, la pression de l'outil sur la pièce, de manière que le poids propre de l'outil soit compensé, lors de la pression de celui-ci contre la pièce sur toute la distance d'usinage, la position angulaire de l'outil étant déterminée à partir des données respectives de l'axe du robot.

2. Procédé selon la revendication 1,
**caractérisé**
**en ce que** la détermination de la position angulaire de l'outil s'effectue à des intervalles de 0,2 seconde.

3. Procédé selon la revendication 1 ou 2,
**caractérisé**
**en ce qu'**on utilise comme organe de régulation une soupape de pression proportionnelle, la valeur de consigne, déterminée à intervalles de temps réguliers, étant transmise en tant que signal analogique à la soupape de pression proportionnelle et la pression résultant du signal analogique agit sur des vérins pneumatiques de l'outil d'usinage lesquels travaillent à l'encontre de deux autres vérins pneumatiques qui reçoivent une contre-pression fixe et la différence des forces, résultant des différentes pressions, sert à compenser le poids propre utile.

4. Dispositif pour le guidage précis d'un outil d'usinage (11) le long d'une courbe fermée dans l'espace, cette courbe présentant deux points extrêmes dans l'un desquels la force de gravité de l'outil d'usinage (11) s'additionne à la force de pression, tandis que dans le deuxième point, la force de gravité de l'outil d'usinage se soustrait de la force de pression, constitué d'un robot sur le bras duquel est disposé un outil d'usinage (11) qui suit, au moyen de groupes actionnés par une commande de robot, l'allure définie d'une courbe, conformément au contour de la pièce (10) à usiner avec une force de pression déterminée,
**caractérisé**
**en ce qu'**en amont des groupes (12) assurant le positionnement de l'outil d'usinage (11) dans l'espace, est monté un organe de régulation (13) dont l'entrée reçoit une valeur de consigne correspondant à la position angulai.re respective de l'outil (11) et déterminée avec un programme de robot, se déroulant en arrière-plan, à intervalles de temps déterminés, valeur de consigne sur la base de laquelle l'organe de régulation (13) produit une valeur de sortie/valeur réelle pour la régulation de la force de pression de l'outil (11) sur la pièce (10).

5. Dispositif selon la revendication 4,
**caractérisé**
**en ce que** l'organe de régulation est une soupape de pression proportionnelle et les groupes (12) sont des vérins pneumatiques.

6. Dispositif selon la revendication 4,
**caractérisé**
**en ce que** l'organe de régulation est un microprocesseur électronique et les groupes sont des moteurs électriques pas à pas.
